# EUROPEAN PATENT SPECIFICATION

(11) **EP 3 555 532 B1**
(45) Date of publication and mention of the grant of the patent: **17.02.2021**
(21) Application number: 17837913.7
(22) Date of filing: 15.12.2017
(51) Int. Cl.: F24F 7/10, A01F 25/08, A01F 25/22, F24F 13/068

(54) **BUILDING FOR KEEPING GOODS TO BE VENTILATED, AS WELL AS FLOOR PART FOR USE IN THE BUILDING**
GEBÄUDE ZUR AUFBEWAHRUNG VON ZU BELÜFTENDEN WAREN SOWIE BODENTEIL ZUR VERWENDUNG IN DEM GEBÄUDE
BÂTIMENT POUR GARDER DES MARCHANDISES À VENTILER, AINSI QUE PARTIE DE PLANCHER À UTILISER DANS LE BÂTIMENT

(30) Priority: 16.12.2016 NL 2018016
(43) Date of publication of application: 23.10.2019
(73) Proprietor: Lauka Holding B.V., 5591 JL Heeze (NL)
(72) Inventor: VAN VONDEREN, Wim, 6642 BR Beuningen (NL)
(74) Representative: Verhees, Godefridus Josephus Maria
(86) International application number: PCT/NL2017/050842
(87) International publication number: WO 2018/111107

(56) References cited:
- EP-A2- 0 511 736
- GB-A- 1 604 969
- US-A- 3 172 740
- US-A1- 2012 115 409

## Description

### Field of the invention

The present invention relates to a building for storing goods to be ventilated. Furthermore, the invention relates to an assembly of a floor element and a filler piece and relates to a floor element.

### State of the art

A building as defined in the preamble of claim 1 is known from GB1604969A. Buildings of this type are frequently used for storing in large quantities goods to be ventilated, more particularly agricultural goods such as potatoes, onions, celeriac, carrots, corn or maize. For preventing these goods from going bad, the building is to be sufficiently ventilated and conditioned. For this purpose the known building comprises a supporting structure for supporting a floor as well as a floor on which the goods to be ventilated can be stored, where the floor comprises a multiplicity of substantially identical floor elements which rest on the supporting structure and where each floor element contains a multiplicity of through openings.

Each floor element surface facing the goods to be ventilated has a central portion in which there are a multiplicity of openings, and an edge portion bounding on the central portion having said peripheral edge. The central portion and the edge portion are integrally connected to each other.

In order to be able to ventilate, the known building is provided with an inlet opening for supplying air and an outlet opening for discharging the air. During this operation the known building utilizes one or more fans for causing air to flow from the inlet opening through one or more openings of each floor element through the goods to be ventilated toward the outlet opening.

When a building is emptied, relatively heavy vehicles are utilized such as a shovel or a forklift truck which is provided with a bucket. During this operation the bucket of the vehicle comes into contact with the floor. Consequently, the floor is subjected to large forces.

The known floor element is made of reinforced concrete and comprises a multiplicity of through openings. A known through opening is a rectangular opening. Since floor elements containing these openings turn out to be subject to wear as a result of the above loading operation, floor elements containing curved openings in the form of crescents have recently been developed. It has turned out that floor elements of this type show wear less rapidly than those containing said rectangular openings.

Despite the fact that the curved openings have presented improvements, the wear rate is still considered to be too high.

### Summary of the invention

It is an object of the present invention to provide a building in which the wear rate of the floor has diminished.

According to the invention this object is achieved in that from each floor element at least one of the peripheral edge facing the goods to be ventilated and the through opening edges facing the goods to be ventilated is situated at a distance below the floor element's central portion surface facing the goods to be ventilated. The surface of the floor element between the edge of the opening and the surface of the central portion and/or the surface of the floor element between the peripheral edge and the surface of the central portion may have any conceivable shape here and any conceivable variation.

The inventor of the present invention has realized that the wear is caused by the fact that the bucket of the vehicle exerts a considerable downward force on the floor elements. This is notably a problem for the peripheral edges of the floor elements and the edges of the through openings. With these edges there is a danger for the bucket to exert a large force on a relatively narrow edge of the floor element as a result of which the floor element may crumble at these spots which may lead to the wear mentioned above.

By forming the floor elements near these edges, preferably both the peripheral edges and the edges of the through openings, as beveled edges, it is avoided that the bucket comes into direct contact with the floor element in these vulnerable areas. In these cases the bucket will still exert a force on a remaining part of the floor element. However, in that part the floor element is less vulnerable.

In an embodiment the peripheral edge facing the goods to be ventilated is/are rounded and/or so is the edge of at least one of the through openings of each floor element facing the goods to be ventilated, but preferably both the peripheral edge and the edges of all through openings is/are rounded. With a rounding the edge of an opening is to be understood as the transition from the straight side wall of the opening to the curved surface of the rounding. Analogously, a rounding of the peripheral edge is understood to mean the transition from the straight peripheral wall to the curved surface of the rounding.

In another embodiment is/are beveled the peripheral edge facing the goods to be ventilated and/or the edge of at least one of the through openings of each floor element facing the goods to be ventilated, but preferably both the peripheral edge and the edges of all through openings is/are beveled relative to the horizontal plane, where the bevel is facing the supporting structure. A bevel is understood to mean not only a bevel having a straight surface, but also a bevel having a curved surface, where the surface is smoothly and continuously sloping toward the peripheral edge or edge of the through opening respectively, and where the peripheral edge / edge (contrary to a rounding) is sharp / pointy.

The edge of the opening may be situated in both horizontal and vertical direction at a distance from the sloping part, where a supporting edge for a filler piece to be placed in the opening is formed between the smoothly sloping part and the edge .

Seen in a cross sectional view of the opening, the horizontal distance between the edge of the opening and the surface facing the goods to be ventilated preferably exceeds one third of the width of the opening.

The central portion, at any rate after installation, may define a horizontal plane where the peripheral edge and/or the edges of the through openings are bevelled relative to the horizontal plane and where the bevel is directed to the supporting structure. More particularly, the bevel of the peripheral edge may gradually increase in a direction that is turned away from the central portion. The maximum bevel may be situated in a range between at least 2 and 20 degrees and preferably 4 and 12 degrees. In addition to this, or as a substitute of this, the bevel of the edges of the through openings may gradually increase in a direction toward the openings, where the maximum bevel may be situated in a range between at least 1 and 8 degrees and is preferably 2 to 4 degrees.

As an example of a beveled peripheral edge may be mentioned an edge of which a tangent plane forms an angle to the planar and horizontal top side of the central portion, which angle is situated in the above range. A bevel of this kind may also be utilized for the through openings.

A side wall of the floor element may have a profile, which profile contains a multiplicity of recesses and projecting parts which extend preferably substantially perpendicularly relative to the side wall. An example of such a profile is an undulating or corrugated profile. An example of a profile comprises a sheet pile profile. By utilizing the profile it is again avoided that a bucket exerts too much force on a relatively too narrow edge of the floor element.

The above profile is highly advantageous if the recesses in one side wall are complementary to the projecting parts on an opposite side wall. If floor elements of this type are used, the projecting parts of one floor element will partly fit in the recesses of an adjoining floor element. If the bucket on such a floor approaches the extremities of a projecting part of a floor element, the projecting parts of an adjoining floor element will be able to sufficiently support the bucket, because the bucket does not touch the extremities of these parts but the parts situated more inward.

It is observed that the use of a profile on the side wall may also be advantageous if this profile is used without having the aforementioned bevel of the peripheral edges and/or edges of the through openings.

At least one side wall may be provided with a first structure and an opposite side wall may be provided with a second structure, where the first structure of a floor element may engage with the second structure of an adjoining floor element for forming a further through opening. In this embodiment an additional opening is formed for ventilation purposes. As a result, the number of openings in the central portion of the floor element may be reduced. For example, it is possible for the openings in the corners of the floor element to be omitted. This may be advantageous since the most transverse forces are exerted in this area if the floor is loaded by for example a shovel. However, for guaranteeing sufficient ventilation, the floor is to possess predetermined air permeability. If 4 openings are left out from the floor element, the remaining openings are to be made larger or the number of openings are to be increased. However, these measures have detrimental effects on the strength of the floor element so that heavier and more expensive reinforcement is to be selected. By realizing the opening near the peripheral edge of the floor element in the way described hereinbefore, the air permeability may be guaranteed without this being at the cost of the strength of the floor element.

It is observed that realizing a further opening near the side wall of the floor element may also be advantageous if this is achieved without the aforementioned beveling of the peripheral edges and/or the edges of the through openings and/or without utilizing a profile on the side wall.

Said further opening as regards shape and size may correspond to one of said multiplicity of openings in each floor element.

Each floor element generally comprises a plurality of vertices at which points two side walls touch or closely approach each other. At least at one vertex the profile of the associated side walls may end in a recess at the vertex. It is to be preferred to manufacture the floor element of an in essence rectangular shape. Other shapes are not excluded within the framework of the present invention.

By having the profile end in a recess at the vertices, the floor will show a relatively large opening at these spots. For that matter, for each floor element, that is to say, for every 4 floor elements if they have a rectangular design, the vertex will be situated slightly closer to the central portion of the floor elements. The relatively large openings formed in this manner may be used for pouring/casting hardenable material, so that the floor elements are supported sufficiently by the supporting structure and/or connected to this.

The supporting structure may comprise a multiplicity of parallel arranged girders, where each floor element is supported on either side by a girder/wall. The building may further include adjusting blocks which are placed between the girders and the floor elements and are used for adjusting the floor elements.

Furthermore, the building may include one or more swelling tapes which are each inserted between the girders and the floor elements. The floor may then comprise a multiplicity of connection areas in which at least two floor elements meet and where each swelling tape is positioned relative to a respective connection area in such manner that the swelling tape encloses an opening between at least two floor elements. A floor of this type may comprise a hardened poured material such as grout which has been poured through an opening in the connection area.

The above embodiment offers the advantage that the floor elements can be positioned and adjusted in a simple manner. The floor elements do not usually touch each other in the connection area.

It is observed that for achieving said advantage it may also be sufficient to round off the vertices adequately so that sufficiently large openings evolve in the floor near the connection areas, without making use of said profiles on the side walls and/or said bevel.

The multiplicity of openings are preferably a multiplicity of openings which are identical as regards shape. However, the orientation of the openings may be different, even within one and the same floor element. As an example may be observed that the multiplicity of openings are formed by a straight slotted opening, a curved opening such as a crescent-like opening, a zigzag opening, or an undulating opening. Embodiments in which adjacent openings on one and the same floor element are rotated relative to each other are not excluded here.

Each opening of the multiplicity of openings may widen taperedly in the direction of the supporting structure.

The openings may each have a length that exceeds a width, where the floor elements are installed such that the longitudinal direction of the openings is at right angles to the girders. A multiplicity of floor elements will then be supported by a girder in the longitudinal direction of the girders.

The ratio of a total surface of the floor element on a side facing the supporting structure to the combined surface of the through openings that end on this side, is preferably situated in a range between 2% and 12% and preferably between 4% and 8%. The ratio between a total surface of the floor element on a side turned away from the supporting structure to the combined surface of the through openings that end on this side, is preferably situated in a range between 1% and 8% and preferably between 2% and 4%.

Each through opening may be tapered at an angle that is situated in a range between 1 and 10 degrees and preferably between 3 and 7 degrees. A customary thickness of a floor element is then situated in a range between 12 and 30 cm.

The building may comprise one or more detachable filler pieces which is/are inserted in a respective through opening, where the filler piece is arranged for reducing the air permeability of the through opening. Different goods may pose different demands on the air permeability of the floor. For most goods the ventilation should be neither too high nor too low. By utilizing filler pieces, a through opening may be at least partly filled as a result of which the floor may be rendered suitable for use for other goods without the floor elements being in need of replacement. According to the invention embodiments of the filler piece are possible which enable insertion from the top or from the bottom of the floor. For this purpose the filler piece may at least partly be made of compressible or elastic material.

The filler piece may contain a multiplicity of channels for allowing air to pass through. Further the filler piece may be made of plastic. It is observed that the filler piece may also be used for floor elements already known.

On opposite side walls each floor element may be provided with a spacer element fixedly attached to the floor element, where adjoining floor elements touch each other with said spacer elements. The advantage of this is that the floor elements can be placed against each other without running the risk of damage to the peripheral edge of the floor elements.

The floor element is preferably made of concrete, the floor element preferably comprising reinforcement and/or steel fibres or plastic fibres.

According to another aspect the invention provides an assembly comprised of a floor element and a filler piece as defined hereinbefore. According to yet another aspect the invention also provides a floor element as defined above.

The invention also provides a method of manufacturing a floor element as defined above. This method comprises providing a formwork and a multiplicity of filler pieces mentioned above, where the formwork is provided at the bottom with one or more through openings, and providing a multiplicity of mould parts, the mould parts corresponding to the through openings in the floor element, where each mould part is provided with at least one channel. Furthermore, the method comprises the coupling of a bottom of the mould parts to the formwork, for example by means of screws, such that the at least one channel encloses one or more of said through openings of the formwork in essence in airtight manner.

Subsequently, the filler pieces are coupled to the mould parts, maintained in a coupled position or placed in such manner that each filler piece in essence encloses in airtight manner said at least one channel of a respective mould part. The coupling between mould part and filler piece is then detachable.

Subsequently, a vacuum is realized in the at least one channel for sucking the filler pieces onto the mould parts. While the vacuum is maintained, concrete is poured into the formwork after which it will compact/harden for the formation of a floor element. Once the concrete has compacted/hardened sufficiently, the concrete can be removed from the formwork, for example by turning the formwork round.

The filler piece may comprise projecting elements which engage with said at least one channel for said detachably coupling or maintaining in coupled position the filler piece and the mould part. The forces evolved from the pouring of the concrete and the finishing of it may be so large that the filler piece comes loose. In order to avoid this a vacuum is realized in the at least one channel. Another possibility is to couple the filler piece with other coupling means to the mould part and maintain it in this position during the pouring of the concrete and the hardening period.

The method may also comprise applying overpressure in the at least one channel during the removal of the still green concrete from the formwork. During the removal of the concrete the mould part will be detached from the formwork. This may lead to the hazard of the filler piece being left behind in the mould part and not being attached to the floor element. It is to be preferred to promote the detachment of the filler piece from the mould part by applying vacuum to the at least one channel. This results in a floor element in which the through openings are provided with filler pieces. The invention does not exclude that the use of filler pieces is applied only to specific through openings. The remaining through openings may be formed in such case with a mould part that is not provided with channels but that is provided with a closed top.

The invention also provides an assembly of a mould part and a filler piece as described above. The mould part is then preferably made of expanded polypropylene, more specifically of a closed cell expanded polypropylene foam.

### Brief description of the drawings

The invention will now be described in more detail while reference is made to the appended drawing figures, in which:
Fig. 1A shows an embodiment of a known building and Fig. 1B gives a detailed representation of a bucket moving moves across the floor;
Figs. 2A and 2B show an embodiment of a floor element according to the invention;
Figs. 3A and 3B show the floor element shown in Fig. 2A comprising filler pieces and Fig. 3C shows the filler piece of the floor element shown in Fig. 3A;
Fig. 4A shows a different embodiment of the filler piece and Fig. 4B shows a detail of a floor element with rounded edges;
Figs. 5A and 5B show an embodiment of a floor element according to the invention;
Figs. 6A to 6D show further details of the floor element shown in Fig. 5A;
Fig. 7 shows various embodiments of a floor element according to the invention;
Figs. 8A to 8C show a filler piece which may be used in the floor element shown in Fig. 5A; and
Figs. 9A and 9B show reinforcement which may be used in a floor element according to the invention.

### Detailed description of the drawings

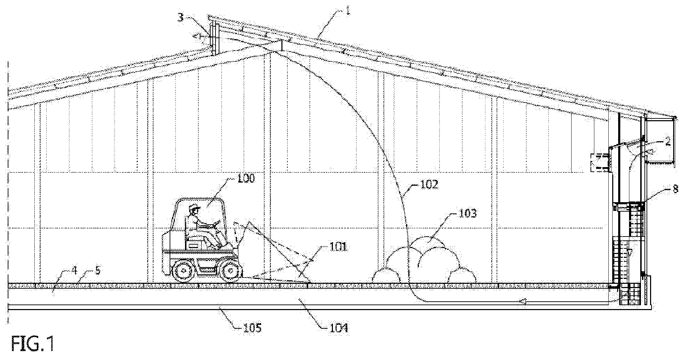

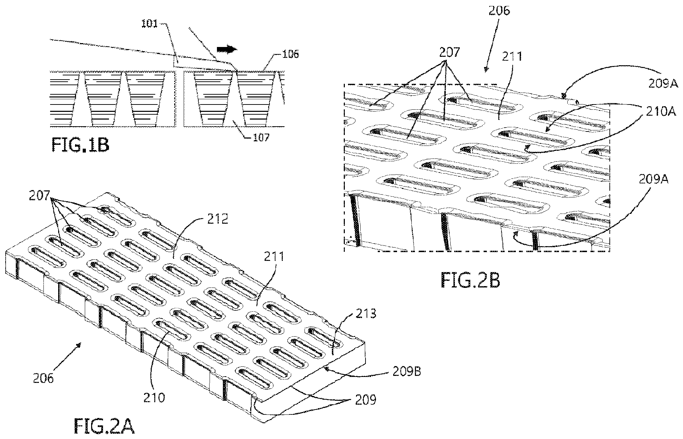

Fig. 1 shows an embodiment of a known building 1. On one side this building is provided with one or more inlet openings 2 which may be arranged as controllable valves. Through inlet openings 2 outside air may be sucked in, which air can leave the building 1 through one or more outlet openings 3, which may also be arranged as controllable valves.

Building 1 comprises a supporting structure 4 which supports a floor 5. Floor 5 comprises a multiplicity of identical floor elements 106 which each comprise a multiplicity of through openings 107 through which air is allowed to pass, see Fig. 1B.

Building 1 may be utilized for storing agricultural goods 103 such as potatoes etc. In order to avoid that these goods will go bad, or to delay this process as much as possible, goods 103 are to be ventilated/conditioned, for example by means of cooling and/or heating. This may be achieved by leading fresh air through the goods. Incidentally, such a ventilation may affect other processes in goods 103 which have an effect on for example the final taste of the goods when they are prepared by a consumer.

For realizing said ventilation, building 1 is provided with one or more fans 8. By means of fans 8 outside air is sucked in through inlet openings 2. This air is led through a channel 104 between floor 5 and foundation 105 and will pass through openings 107 for subsequently ventilating goods 103. Finally, the air led through the goods 103 is discharged through outlet openings 3. Fig. 1 shows an example of the air flow by means of arrow 102.

For moving goods 103 from the building 1 a forklift truck 100 may be used which is provided with a bucket 101 at the front. In this respect it is observed that heavier equipment such as a wheel loader may also be used depending on the size of the building and the quantity of goods to be moved.

The vehicles driving on floor 5, as well as the shoveling and scraping movements of the bucket 101 shown in Fig. 1B, cause the floor 5 and more specifically the floor elements 106 to carry a heavy load.

Fig. 2A shows an embodiment of a floor element 206 according to the invention which is provided with various through openings 207. A floor element surface 211 facing the goods to be ventilated has a central portion 212 in which the openings are situated, and an edge portion 213 bounding on the central portion and provided with a peripheral edge 209. The longitudinal edges 209A of the peripheral edge and the edges 210 of the through openings, among which the longitudinal edges 210A, are situated at a distance below the surface 211 facing the goods to be ventilated of the central portion of the floor element. The bucket 101 will rest on the surface 211 of floor element 206 and not come into contact with the edges 210 and peripheral edge 209, so that these cannot be damaged by the bucket. As a result, this floor element 206 is less subject to wear than the known floor element 106 when the same load is applied. The transverse edge 209B of the peripheral edge is present in the surface 211 and not provided with a rounding or beveling because the bucket scrapes substantially completely in the floor element's transverse direction across the floor element and thus cannot bump against the transverse edges 209B.

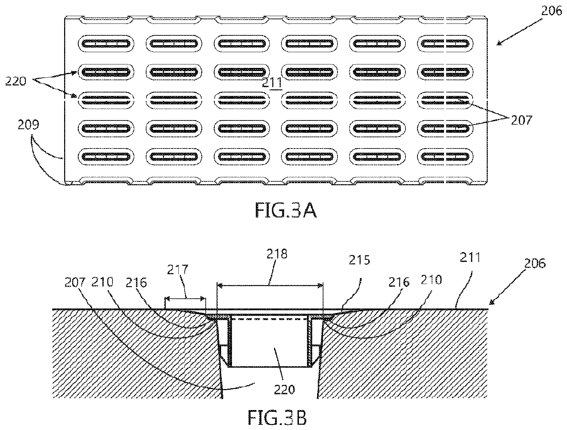

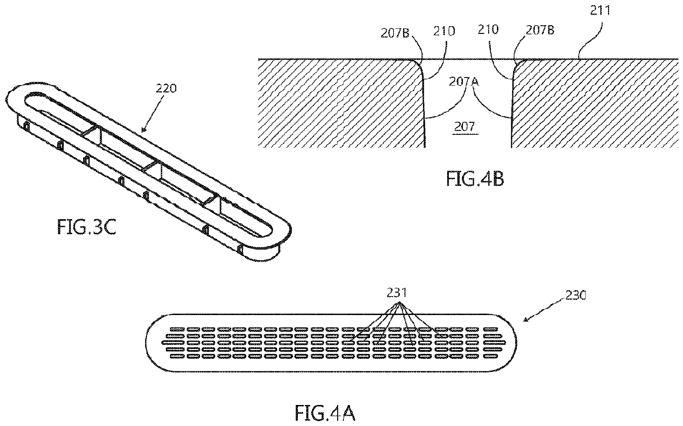

Figs. 3A and 3B show the floor element shown in Fig. 2A containing filler pieces. Fig. 3B shows a cross sectional view of the floor element at the location of one of the through openings. This cross sectional view markedly shows that edges 210 near the opening 207 are bevelled. The upward facing surface 211 of the floor element 206 is planar and horizontal. Also the peripheral edge 209 of the floor element 206 is bevelled. The bevelled part 215 shows a slightly sloping surface. The edge 210 of the opening is present in both horizontal and vertical direction at a distance from the slightly sloping part. Between the sloping part and the edge of the opening is formed a supporting edge 216 which supports a filler piece 220. The horizontal distance 217 between the edge of the opening and the surface facing the goods to be ventilated exceeds one third of the width 218 of the opening. The filler piece 220 is shown in a perspective view in Fig. 3C for illustrative purposes.

Fig. 4A shows a different embodiment of the filler piece. This filler piece 230 is placed in the openings if the goods on the floor are grain or another granular product. The filler piece has a cover plate 231 for partly shutting off the opening, so that the grain is unable to fall through the opening. The cover plate is provided with small holes 232 which do not allow the grain to fall through.

Fig. 4B shows a detail of a floor element having rounded edges 210. A rounding with respect to the edge 210 of an opening is understood to mean the transition from the straight side wall 207A of the opening 207 to the curved surface 207B of the rounding. In analogy with this, a rounding of the peripheral edge is understood to be the transition from the straight peripheral edge to the curved surface of the rounding.

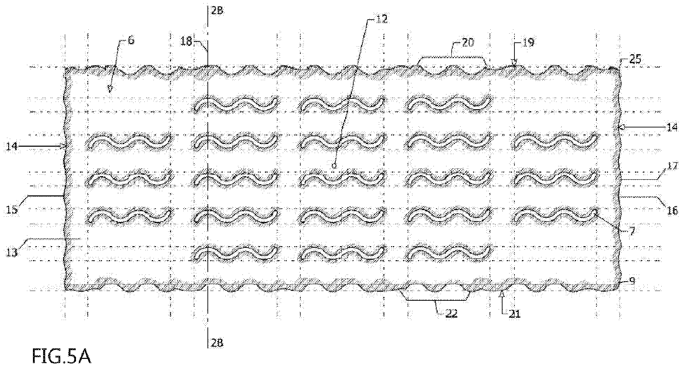

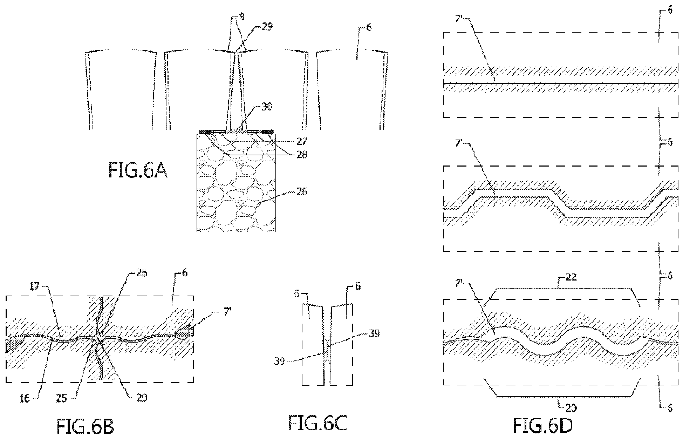

Figs. 5A-5B and 6A-6D show various views of a floor element 6 according to the invention which is provided with various through openings 7. The advantage of floor element 6 relative to the known floor elements, such as floor element 106, is that this floor element is less subject to wear under a same load and/or that this floor element can withstand a larger load.

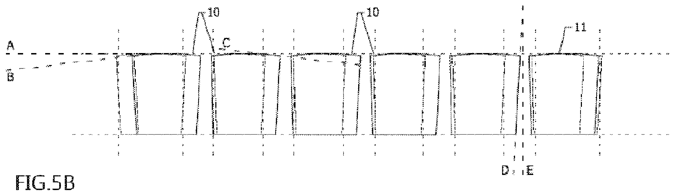

Fig. 5B shows a cross sectional view along line 18 in Fig. 5A. From this cross sectional view it is evident that the edges 10 near the opening 7 are bevelled. Between openings 7 the top of a floor element 6 is substantially planar and horizontal. A similar bevel is provided with respect to peripheral edge 9 of floor element 6. This is shown in more detail in Fig. 6A, showing a cross sectional view of a set of two floor elements 6 which both rest on a girder or wall 26 of the supporting structure.

As a result of the bevel in edges 10 the bucket 101 is prevented from exerting too much power on too small a strip of floor element 6. More particularly, bucket 101, if it is situated around the middle of the floor element 6, will mainly rest on the planar and horizontal top side of floor element 6.

As a result of the bevel in edges 9 the chance of damage occurring to floor elements 6 is reduced considerably, because they are not all installed at the same height. When installed in such manner, which is substantially inevitable in practice, there will be a small step in vertical direction at the transition between adjoining floor elements 6. By utilizing bevelling, this transition will show a more gradual course leading to a reduced chance of wear.

Fig. 5B shows that openings 7 widen in tapered downward direction. As a result of this, relatively much air can be compressed without this affecting the strength of floor element 6. If openings 7 tapered in downward direction, the air flow would be affected disadvantageously and the strength of the floor elements would be reduced.

A surface 11 of floor element 6, see Fig. 5B, facing the goods can be divided into a central portion 12 which includes openings 7 and an edge portion 13 which surrounds central portion 12 and is integrally connected with it, see Fig. 5A.

The part of the floor element 6 between the edge 10 of the opening or peripheral edge 9 of the floor element and the surface 11 facing the goods to be ventilated shows a smooth and continuous slope toward the edge and peripheral edge, respectively. The degree of bevel of peripheral edge 9 may be defined as the angle formed by the tangent plane A on central portion 12 to the tangent plane B on edge portion 13 of peripheral edge 9. In Fig. 5B this is illustrated by means of lines A and B. The degree of bevel of edges 10 may be defined in a similar manner. Fig. 5B shows a line C which can be used for this purpose.

It is to be preferred if the angle between lines A and B is situated in the range between 2 and 20 degrees and the angle between lines A and C is situated in the range between 1 and 8 degrees.

Fig. 5B further shows a line D which corresponds to a tangent plane on an inner wall of an opening 7 and a line E, which corresponds to a vertical, that is to say, a line that is at right angles to line A. Preferably the angle between lines D and E is situated in the range from 3 to 7 degrees. Fig. 5A shows that left and right side walls 14 have a profile 15. This profile comprises recesses 16 and projecting parts 17. The right side wall in Fig. 5A and the left side wall in Fig. 5A both have these structures. However, the location of these structures is complementary. This is to say, that when a multiplicity of floor elements 6 are installed a recess 16 of a floor element fits in with a projecting part 17 of another floor element. This is shown, for example, in Fig. 6B.

This measure too helps to avoid that the bucket 101 exerts too much power on too narrow an edge of a floor element. For that matter, bucket 101 is supported by both floor elements at the transition of two adjoining floor elements.

Fig. 5A shows that the floor element 6 at its upper side wall 19 and lower side wall 21 is provided with structures 20 and 22, respectively. When a multiplicity of floor elements are installed, structures 20 of one floor element cooperate with structures 22 of an adjoining floor element so that a further through opening 7' is formed, see Fig. 6D. This opening preferably has a similar shape to openings 7. It is observed that both structures 20, 22 and profile 15 may be applied simultaneously, as is represented in Fig. 6B.

The advantage of opening 7' is that an additional opening is created for the air ventilation. As a result of this, an opening 7 may be omitted in floor element 6 without this leading to a reduction of the air permeability of floor 5. Preferably, openings 7 in the corners of floor element 6 are omitted, as is represented in Fig. 5A. At these spots for that matter the floor element 6 is subjected most to transverse forces caused by the bucket 101 and the axle load of forklift truck 100.

With reference to Fig. 6B, floor elements 6 each have a multiplicity of vertices 25. It is to be preferred for profile 15 to end in a recess at these vertices. A comparatively large hole will then arise in connection area 29 where various floor elements 6 meet. This hole can be used when installing the floor elements 6, as is represented in Figs. 6A and 6B.

Fig. 6A distinctly shows how floor elements 6 are supported on either side by a girder 26. Adjusting blocks 27 with which floor elements 6 are adjusted are inserted between floor elements 6 and girder 26. Foam 28 is sprayed around the through openingin connection area 29. In consequence, the opening in connection area 29 is sealed relative to the space between parallel arranged girders 26. The advantage of this is that floor elements 6, once they have been initially adjusted, can be stabilized by pouring hardenable material through the opening into connection area 29. Once this material such as grout 30 has hardened, floor elements 6 will be supported better. It is not excluded in this respect that the pouring of hardenable material and the subsequent hardening of this material is also used for connecting floor elements 6 to girders/wall 26.

Fig. 6C shows adjoining floor elements 6 which in a side wall are each provided with an spacer element 39 in the form of a lug. By utilizing these spacer elements, floor elements 6 may be installed closer together without the vulnerable edges on the top side of the floor elements touching each other.

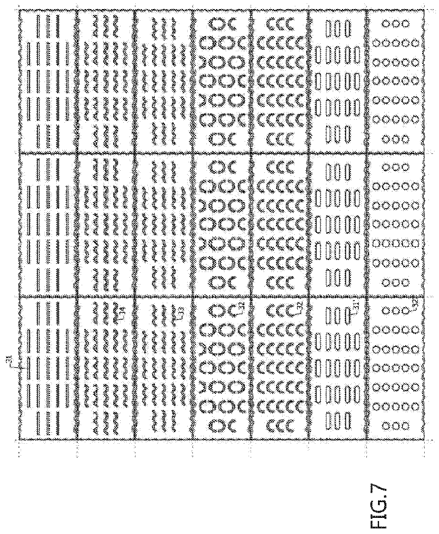

Fig. 7 shows examples of shapes of openings 7 which may be used in a floor element 6. For example, slotted openings 31, possibly rounded openings 31', curved openings in the shape of a crescent 32 or annular openings 32'. zigzag openings 33 and/or undulating openings 34 may be used. Openings 32 - 34 then have the advantage that the chance of edges 10 of these openings 7 being damaged is smallest possible, because the bucket 101 is supported better when moving across these openings. The invention does not exclude that within one floor element 6 different types of openings are used and/or openings that have mutually different orientations.

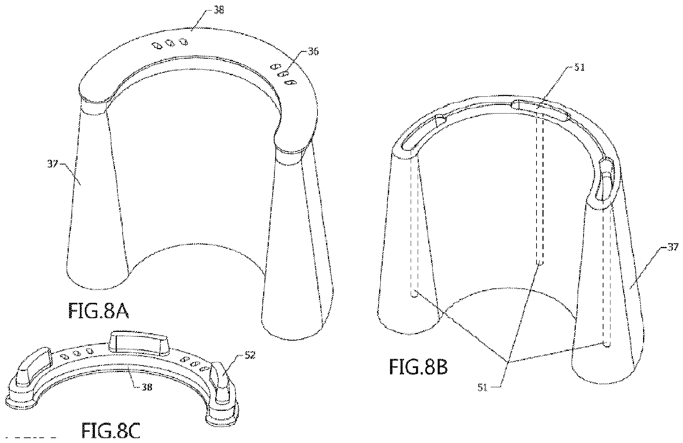

The goods to be ventilated are usually to be exposed to ventilation which has both an upper limit and a lower limit. The consequence of this is that, if there is a change in the kind of goods that are to be stored in a building, a sub-optimum situation may arise since the air permeability of the floor 5 is no longer tailored to the new goods. To solve this problem or respond to it, the invention also relates to an assembly of a floor element 6 and a filler piece 38 which can be inserted into an opening 7. This filler piece is shown in Figs. 8A to 8C.

For installing filler piece 38, floor element 6 is removed from floor 5 and filler piece 38 is inserted from the bottom of floor element 6. Installing or removing filler piece 38 from the top, without the need for floor element 6 to be removed from the floor 5 is not excluded.

Filler piece 38 is provided with a multiplicity of air channels 36. Once the filler piece 38 has been installed, the air permeability of floor element 6 is confined in that the air is now to pass through air channels 36. In another embodiment opening 7 is substantially completely closed once the filler piece 38 has been fitted and the air permeability of floor 5 is controlled by the selection of the number of openings 7 such a filler piece is provided with. It may be evident that the two approaches may be combined.

For the manufacture of floor elements 6 is used a formwork or different kind of mould. At the bottom the formwork is then provided with one or more through openings. Coupled to the bottom are mould parts 37 which are provided with channels 51 which end at a top of the mould parts 37, see Fig. 8B. Mould parts are manufactured from closed cell expanded polypropylene foam.

Mould parts 37 are fitted to the formwork by means of screws or coupling means of a different kind.The shape of the mould parts 37 determines the shape of through openings 7. In Fig. 8B the shape of mould part 37 corresponds to the crescent shape 32 from Fig. 4.

Mould parts 37 are coupled to the formwork such that channels 51 each enclose one or more of said through openings of the formwork in essence in airtight manner.

Subsequent to this, filler pieces 38 may be coupled to mould parts 37. To this end, filler pieces 38 are provided with coupling structures 52 which engage with the openings in the top of mould parts 37 into which channels 51 open.

As a next step a vacuum is produced in channels 51 as a result of which filler pieces 38 are rigidly sucked against mould parts 37. This vacuum provides that filler pieces 38 maintain their position during the pouring of concrete in the formwork and the subsequent processing.

After having hardened sufficiently, floor element 6 may be removed from the formwork. If so desired overpressure may be produced in channels 51 during the removal from the mould so as to provide that filler piece 38 stays behind in through opening 7 in lieu of the filler piece remaining stuck to mould part 37.

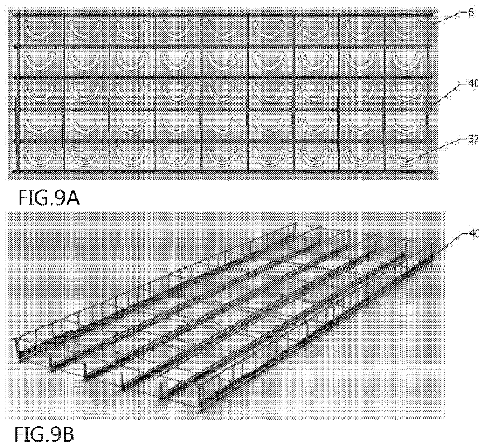

A floor element 6 may be manufactured either or not having filler pieces 38 attached. The choice may also be to provide only a portion of openings 7 with a filler piece 38. Floor element 6 is manufactured preferably from reinforced concrete. Figs. 9A and 9B show examples of how such reinforcement 40, shown in Fig. 9B, may be arranged around the openings 32 in floor element 6. Reinforcement of this kind is relatively costly. The measures as described above enhance the loadability of floor elements 6. As a result of this, it may suffice to include less reinforcement and/or reinforcement having lower strength. This reinforcement is usually more cost effective.

Despite the fact that the present invention has been described in the foregoing with reference to the embodiments shown in the drawing figures, it will be understood by those skilled in the art that the invention is not by any manner or means restricted to this, but that various modifications may be introduced without deviating from the protective scope defined by the following claims.

## Claims

1. A building for storing goods to be ventilated, such as potatoes or maize, comprising:
- an inlet opening (2) for supplying air;
- an outlet opening (3) for discharging air;
- a supporting structure (4) for supporting a floor (5);
- a floor on which may be stored goods to be ventilated, where the floor comprises a multiplicity of substantially identical floor elements (6) which are supported by the supporting structure and where each floor element comprises a multiplicity of through openings (7);
- one or more fans (8) for causing air to flow from the inlet opening, through the one or more openings of each floor element, through the goods to be ventilated, toward the outlet opening, where each floor element surface (11) facing the goods to be ventilated comprises a central portion (12) which accommodates the multiplicity of openings, and a peripheral portion (13) having said peripheral edge and bounding on the central portion, where the central portion defines a horizontal plane, that is, after installation,
**characterized in that** from each floor element at least one of the peripheral edge (9) facing the goods to be ventilated and the through opening edges (10) facing the goods to be ventilated is situated at a distance below the floor element's central portion surface (11) facing the goods to be ventilated.

2. A building as claimed in claim 1, where the peripheral edge facing the goods to be ventilated and/or the edge of at least one of the through openings of each floor element facing the goods to be ventilated is/are rounded.

3. A building as claimed in claim 1 or 2, where the peripheral edge and/or the edge of at least one of the through openings of each floor element is/are bevelled relative to the horizontal plane, and where the bevel is facing the supporting structure.

4. A building as claimed in any one of the previous claims, where the part of the floor element between the edge of the opening or peripheral edge of the floor element and the surface (11) facing the goods to be ventilated slopes substantially smoothly and continuously toward the edge or peripheral edge, respectively.

5. A building as claimed in claim 4, where the edge of the opening is situated in both horizontal and vertical direction at a distance from the smoothly sloping part, where a supporting edge for a filler piece to be placed in the opening is formed between the sloping part and the edge.

6. A building as claimed in any one of the previous claims, where, seen in a cross sectional view of the opening, the horizontal distance between the edge of the opening and the surface facing the goods to be ventilated exceeds one third of the width of the opening.

7. A building as claimed in claim 4, 5 or 6, where the bevel of the peripheral edge gradually increases in a direction that is turned away from the central portion, where the maximum bevel is situated in a range between at least 2 and 20 degrees and preferably 4 and 12 degrees and/or where the bevel of the edges of the through openings gradually increases in a direction toward the openings, where the maximum bevel is situated in a range between at least 1 and 8 degrees and is preferably 2 to 4 degrees.

8. A building as claimed in any one of the previous claims, where the multiplicity of openings are identical openings as regards shape.

9. A building as claimed in claim 8, further including at least one detachable filler piece (38) which is inserted in a respective through opening, where the filler piece is arranged for reducing the air permeability of the through opening.

10. A building as claimed in claim 9, where the filler piece contains a multiplicity of channels (36) for allowing air to pass through.

11. A building as claimed in claim 9 or 10, where the filler piece is made of a plastic material.

12. A method of manufacturing a floor element as defined in any of claims 1-11 for a building according to any of claims 1-11 comprising:
- providing a formwork and a multiplicity of filler pieces according to any of claims 5, 9-11, where the formwork is provided at the bottom with one or more through openings;
- providing a multiplicity of mould parts, the mould parts corresponding to the through openings in the floor element, where each mould part is provided with at least one channel
- coupling of a bottom of the mould parts to the formwork, for example by means of bolts / screws, such that the at least one channel encloses one or more of said through openings of the formwork in essence in airtight manner;
- detachably coupling, placing or maintaining in coupled position the filler pieces to or on the mould parts in such manner that each filler piece closes said at least one channel of a respective mould part substantially in airtight manner;
- producing vacuum in the at least one channel for sucking the filler pieces onto the mould parts;
- pouring concrete into the formwork while the vacuum is maintained;
- compacting / hardening the concrete for the formation of a floor element;
- removing from the formwork the compacted / hardened concrete after sufficient compacting / hardening.

13. A method as claimed in claim 12, where the filler piece comprises projecting elements which engage with said at least one channel for said detachably coupling or maintaining in coupled position the filler piece and the mould part.

## Patentansprüche

1. Ein Gebäude zur Lagerung zu belüftender Güter wie Kartoffeln oder Mais, umfassend:
- eine Einlassöffnung (2) zur Luftzufuhr;
- eine Auslassöffnung (3) zum Ablassen von Luft;
- eine TragStruktur (4) zum Tragen eines Bodens (5);
- einen Boden, auf dem zu belüftende Waren gelagert werden können, wobei der Boden eine Vielzahl von im wesentlichen identischen Bodenelementen (6) umfasst, die von der Tragstruktur getragen werden, und wobei jedes Bodenelement eine Vielzahl von Durchgangsöffnungen (7) aufweist;
- einen oder mehrere Ventilatoren (8), um zu bewirken, dass Luft von der Einlassöffnung durch die eine oder mehreren Öffnungen jedes Bodenelements durch die zu belüftende Waren in Richtung der Auslassöffnung strömt, wo jede Bodenelementoberfläche (11) die den zu belüftende Ware zugewandt ist einen Mittelabschnitt (12) umfasst, der die Vielzahl von Öffnungen aufnimmt, und einen Umfangsabschnitt (13) mit der Umfangskante und Begrenzung am Mittelabschnitt, wobei der Mittelabschnitt eine horizontale Ebene definiert, d. h. nach Installation,
**dadurch gekennzeichnet, dass** von jedem Bodenelement mindestens eine der Umfangskanten (9), die den zu belüftenden Ware zugewandt sind, und die durchgehenden Öffnungskanten (10), die den zu belüftenden Ware zugewandt sind, in einem Abstand unterhalb der zentralen Teilfläche des Bodenelements (11) gegenüber der zu belüftenden Ware gelegen ist.

2. Gebäude nach Anspruch 1, wobei die Umfangskante, die der zu belüftenden Ware zugewandt ist, und/oder die Kante von mindestens einer der Durchgangsöffnungen jedes Bodenelements, die der zu belüftenden Ware zugewandt ist, abgerundet ist/sind.

3. Gebäude nach Anspruch 1 oder 2, bei dem die Umfangskante und/oder die Kante mindestens einer der Durchgangsöffnungen jedes Bodenelements relativ zur horizontalen Ebene abgeschrägt ist/sind und bei der die Abschrägung zur unterstützende Struktur zugewandt ist.

4. Gebäude nach einem der vorhergehenden Ansprüche, wobei der Teil des Bodenelements zwischen der Kante der Öffnung oder der Umfangskante des Bodenelements und der Oberfläche (11), die der zu belüftenden Ware zugewandt ist, im Wesentlichen glatt und kontinuierlich geneigt ist in Richtung der Kante bzw. Randkante.

5. Gebäude nach Anspruch 4, wobei die Kante der Öffnung sowohl in horizontaler als auch in vertikaler Richtung in einem Abstand von dem glatt abfallenden Teil angeordnet ist, wobei eine Stützkante für ein Füllstück das in die Öffnung eingebracht werden soll zwischen der abfallende Teil und die Kante ausgebildet ist,.

6. Gebäude nach einem der vorhergehenden Ansprüche, wobei in einer Querschnittsansicht der Öffnung der horizontale Abstand zwischen dem Rand der Öffnung und der Oberfläche, die der zu belüftenden Ware zugewandt ist, ein Drittel der Breite der Öffnung überschreitet.

7. Gebäude nach Anspruch 4, 5 oder 6, bei dem die Abschrägung der Umfangskante allmählich in einer Richtung zunimmt, die vom Mittelteil weg gedreht ist, wobei die maximale Abschrägung in einem Bereich zwischen mindestens 2 und 20 Grad liegt und vorzugsweise zwischen 4 und 12 Grad und/oder wo die Abschrägung der Kanten der Durchgangsöffnungen allmählich in Richtung der Öffnungen zunimmt, wobei die maximale Abschrägung in einem Bereich zwischen mindestens 1 und 8 Grad liegt und vorzugsweise 2 bis 4 Grad beträgt.

8. Gebäude nach einem der vorhergehenden Ansprüche, bei dem die Vielzahl der Öffnungen hinsichtlich der Form identische Öffnungen sind.

9. Gebäude nach Anspruch 8, ferner mit mindestens einem abnehmbaren Füllstück (38), das in eine jeweilige Durchgangsöffnung eingesetzt ist, wobei das Füllstück zur Verringerung der Luftdurchlässigkeit der Durchgangsöffnung angeordnet ist.

10. Gebäude nach Anspruch 9, wobei das Füllstück eine Vielzahl von Kanälen (36) enthält, um Luft durchzulassen.

11. Gebäude nach Anspruch 9 oder 10, bei dem das Füllstück aus einem Kunststoff besteht.

12. Verfahren zur Herstellung eines Bodenelements gemäß einem der Ansprüche 1 bis 11, umfassend:
- Bereitstellen einer Schalung und einer Vielzahl von Füllstücken gemäß einem der Ansprüche 5, 9 bis 11, wobei die Schalung unten mit einer oder mehreren Durchgangsöffnungen versehen ist;
- Bereitstellen einer Vielzahl von Formteilen, wobei die Formteile den Durchgangsöffnungen im Bodenelement entsprechen, wobei jedes Formteil mit mindestens einem Kanal versehen ist
- Ankoppeln eines Bodens der Formteile an die Schalung, beispielsweise mittels Bolzen/Schrauben, so dass der mindestens eine Kanal eine oder mehrere der durchgehenden Öffnungen der Schalung im Wesentlichen luftdicht umschließt;
- lösbares Koppeln, Platzieren oder Halten der Füllstücke an oder auf den Formteilen in der gekoppelten Position, so dass jedes Füllstück den mindestens einen Kanal eines jeweiligen Formteils im Wesentlichen luftdicht verschließt;
- Erzeugen eines Vakuums in mindestens einem Kanal zum Ansaugen der Füllstücke auf die Formteile;
- Gießen von Beton in die Schalung unter Beibehaltung des Vakuums;
- Verdichten/Härten des Betons zur Bildung eines Bodenelements;
- Entfernen des verdichteten/ausgehärteten Betons von der Schalung nach ausreichendem Verdichten/Aushärten.

13. Verfahren nach Anspruch 12, wobei das Füllstück vorstehende Elemente umfasst, die mit dem mindestens einen Kanal in Eingriff stehen, um das Füllstück und das Formteil abnehmbar zu koppeln oder in gekoppelter Position zu halten.

## Revendications

1. Bâtiment de stockage de marchandises à ventiler, telles que pommes de terre ou maïs, comprenant:
- une ouverture d'entrée (2) pour fournir de l'air;
- une ouverture de sortie (3) pour évacuer l'air;
- une structure de support (4) pour supporter un plancher (5);
- un plancher sur lequel peuvent être stockés des marchandises à ventiler, où le plancher comprend une multiplicité d'éléments de plancher sensiblement identiques (6) qui sont supportés par la structure de support et où chaque élément de plancher comprend une multiplicité d'ouvertures traversantes (7);
- un ou plusieurs ventilateurs (8) pour faire circuler l'air depuis l'ouverture d'entrée, à travers une ou plusieurs ouvertures de chaque élément de plancher, à travers les marchandises à ventiler, vers l'ouverture de sortie, où chaque surface d'élément de plancher (11) fait face la marchandise à ventiler comprend une partie centrale (12) qui reçoit la multiplicité des ouvertures, et une partie périphérique (13) ayant ledit bord périphérique et délimitant sur la partie centrale, où la partie centrale définit un plan horizontal, c'est-à-dire après installation,
**caractérisé en ce que**, à partir de chaque élément de plancher, au moins l'un parmi le bord périphérique (9) faisant face aux marchandises à ventiler et les bords d'ouverture traversants (10) faisant face aux marchandises à ventiler est situé à une distance au-dessous de la surface de la partie centrale de l'élément de plancher (11) face aux marchandises à ventiler.

2. Bâtiment selon la revendication 1, dans lequel le bord périphérique faisant face aux marchandises à ventiler et/ou le bord d'au moins une des ouvertures traversantes de chaque élément de plancher faisant face aux marchandises à ventiler est/sont arrondis.

3. Bâtiment selon la revendication 1 ou 2, dans lequel le bord périphérique et/ou le bord d'au moins une des ouvertures traversantes de chaque élément de plancher est/sont biseautés par rapport au plan horizontal, et où le biseau fait face au structure de support.

4. Bâtiment selon l'une quelconque des revendications précédentes, dans lequel la partie de l'élément de plancher entre le bord de l'ouverture ou le bord périphérique de l'élément de plancher et la surface (11) faisant face aux marchandises à ventiler s'incline de manière sensiblement régulière et en continu vers le bord ou le bord périphérique, respectivement.

5. Bâtiment selon la revendication 4, dans lequel le bord de l'ouverture est situé à la fois dans le sens horizontal et vertical à une distance de la partie en pente douce, où un bord de support pour une pièce de remplissage à placer dans l'ouverture est formé entre la partie en pente et le bord.

6. Bâtiment selon l'une quelconque des revendications précédentes, dans lequel, vue en coupe transversale de l'ouverture, la distance horizontale entre le bord de l'ouverture et la surface faisant face aux marchandises à ventiler dépasse un tiers de la largeur. de l'ouverture.

7. Bâtiment selon la revendication 4, 5 ou 6, dans lequel le biseau du bord périphérique augmente progressivement dans une direction qui s'éloigne de la partie centrale, où le biseau maximum est situé dans une plage comprise entre au moins 2 et 20 degrés et de préférence 4 et 12 degrés et/ou où le biseau des bords des ouvertures traversantes augmente progressivement dans une direction vers les ouvertures, où le biseau maximal est situé dans une plage entre au moins 1 et 8 degrés et est de préférence de 2 à 4 degrés.

8. Un bâtiment selon l'une quelconque des revendications précédentes, dans lequel la multiplicité des ouvertures est des ouvertures identiques en ce qui concerne la forme.

9. Bâtiment selon la revendication 8, comprenant en outre au moins une pièce de remplissage détachable (38) qui est insérée dans une ouverture traversante respective, où la pièce de remplissage est agencée pour réduire la perméabilité à l'air de l'ouverture traversante.

10. Bâtiment selon la revendication 9, dans lequel la pièce de remplissage contient une multiplicité de canaux (36) pour permettre à l'air de passer.

11. Bâtiment selon la revendication 9 ou 10, dans lequel la pièce de remplissage est en matière plastique.

12. Procédé de fabrication d'un élément de plancher tel que défini dans l'une quelconque des revendications 1 à 11, comprenant:
- fournir un coffrage et une multiplicité de pièces de remplissage selon l'une quelconque des revendications 5, 9 à 11, où le coffrage est pourvu au fond d'une ou plusieurs ouvertures traversantes;
- fournir une multiplicité de parties de moule, les parties de moule correspondant aux ouvertures traversantes dans l'élément de plancher, où chaque partie de moule est pourvue d'au moins un canal
- couplage d'un fond des parties de moule au coffrage, par exemple au moyen de boulons/vis, de sorte que le au moins un canal renferme une ou plusieurs desdites ouvertures traversantes du coffrage essentiellement de manière étanche à l'air;
- coupler, placer ou maintenir en position couplée de manière détachable les pièces de remplissage sur ou sur les parties de moule de telle manière que chaque pièce de remplissage ferme ledit au moins un canal d'une partie de moule respective sensiblement de manière étanche à l'air;
- produire du vide dans le au moins un canal pour aspirer les pièces de remplissage sur les parties de moule;
- couler du béton dans le coffrage pendant que le vide est maintenu;
- compactage/durcissement du béton pour la formation d'un élément de plancher;
- enlever du coffrage le béton compacté/durci après un compactage/durcissement suffisant.

13. Procédé selon la revendication 12, dans lequel la pièce de remplissage comprend des éléments en saillie qui s'engagent avec ledit au moins un canal pour ledit couplage amovible ou le maintien en position couplée de la pièce de remplissage et de la partie de moule.
